# EUROPÄISCHE PATENTSCHRIFT

(11) **EP 2 836 519 B1**
(45) Veröffentlichungstag und Bekanntmachung des Hinweises auf die Patenterteilung: **24.08.2016**
(21) Anmeldenummer: 13711018.5
(22) Anmeldetag: 18.03.2013
(51) Int. Cl.: C08F 2/22

(54) **THERMOTROPE PARTIKEL, VERFAHREN ZU DEREN HERSTELLUNG UND DEREN VERWENDUNG SOWIE DIESE ENTHALTENDE DOTIERTE POLYMERE**
THERMATROPIC PARTICLES, METHOD FOR THE PRODUCTION AND USE THEREOF, AND DOPED POLYMERS CONTAINING SAME
PARTICULE THERMOTROPE, SON PROCÉDÉ DE FABRICATION ET SON UTILISATION, AINSI QUE POLYMÈRES DOPÉS LES CONTENANT

(30) Priorität: 13.04.2012 DE 102012007438
(43) Veröffentlichungstag der Anmeldung: 18.02.2015
(73) Patentinhaber: Quarzwerke GmbH, 50226 Frechen (DE)
(72) Erfinder: SEEBOTH, Arno, 12557 Berlin (DE); RUHMANN, Ralf, 12621 Berlin (DE); MÜHLING, Olaf, 50226 Frechen (DE); ZILLES, Jörg-Ulrich, 50677 Köln (DE); KRUBER, Dirk, 53347 Alfter (DE)
(74) Vertreter: dompatent von Kreisler Selting Werner - Partnerschaft von Patent- und Rechtsanwälten mbB
(86) Internationale Anmeldenummer: PCT/EP2013/055554
(87) Internationale Veröffentlichungsnummer: WO 2013/152923

(56) Entgegenhaltungen:
- EP-A1- 1 258 504
- EP-A1- 1 304 161
- EP-A2- 0 800 097
- WO-A1-2011/000688

## Beschreibung

Die Erfindung betrifft ein Verfahren zur Herstellung von thermotropen Partikeln für die Dotierung von Polymermatrizes sowie derartige dotierte Polymere. Verwendung finden die erfindungsgemäßen dotierten Polymermatrizes als Sonnenschutz, z.B. in Form von Lacken, Coatings, Harzen, Duromeren oder Thermoplasten.

Nach wie vor erfolgt der Schutz vor Überhitzung in Gebäuden überwiegend durch konventionelle mechanische Verschattung. Der durchschnittliche Jahresverbrauch an Energie in Gebäuden für deren Kühlung übersteigt weltweit schon beinahe den adäquaten Energieverbrauch für deren Heizung. Der zunehmende Einsatz von Glasfassaden in der Architektur, einschließlich der Verwendung organischer Gläser, beschleunigt diesen Prozess zunehmend. Die exzellenten Wärmeisolationsfähigkeiten heutiger Glasfassaden, wodurch die Gebäude im Winter vor Auskühlung bewahrt werden, bewirken in warmen Jahreszeiten einen energetisch kontraproduktiven Effekt. Elektrischer Strom für die Kühlung wird benötigt. Eine Optimierung der Energiebilanz ist erforderlich, um zunehmenden thermischen Stress in den Städten zu vermeiden. Dementsprechend müssen Gebäude so geplant werden, dass eine passive Kühlung erfolgt, anstatt sie mit elektrischen Klimaanlagen auszustatten.

Neue Techniken wie die Gasochromie, aber auch vor allem die Elektrochromie, konnten sich bislang nicht am Markt etablieren. Sie führen auch nach mehr als einem Jahrzehnt nach ihrer Markteinführung nur ein Nischendasein. Ausschlaggebend hierfür sind neben ökonomischen Aspekten nach wie vor auch ungelöste technologische Fragen und hohe nachfolgende Wartungskosten.

Der Einsatz thermotroper Hydrogele (Affinity Co. Ltd) oder Polymerblends (Interpane) für den Sonnenschutz wird seit Jahrzehnten diskutiert. Beide Materialtypen, die als physikalischen Effekt die Phasenseparation nutzen, konnten keinen Durchbruch am Markt erreichen. Die Verwendung von Phase-Change-Materialien (PCM) in Kapselform zum Zwecke der Wärmereflexion / des Sonnenschutzes und deren Einarbeitung in Kunststoffe gehören ebenfalls zum geläufigen Stand der Technik. So beschreibt WO 93/15625 A1 die Wärmeisolation in Kleidung und Schuhen, EP 1 321 182 B1 die Nutzung von Latentwärmespeichern zur Temperaturregefung, US 2003/0109910 A1 Isolationsschichten für Kleidung und Handschuhe und WO 94/02257 A2 den Einsatz von PCM für Kleidung und medizinisch-therapeutische Zwecke. Eine klare Handlungsanweisung für eine praxisrelevante Realisierung thermisch steuerbarer optischer Effekte, die für einen adaptiven Sonnenschutz geeignet sind, geben diese Schriften jedoch nicht.

Die Anwendung thermotroper Monomere einer aliphatischen Verbindung der allgemeinen Formel CnHn+2 mit n = 5 bis 30 in einer Konzentration zwischen 0,5 und 10 Gew% in einem photohärtenden Polymer zur Beeinflussung des temperaturabhängigen Brechungsindexes, wie in EP 1 258 504 B1 vorgeschlagen, konnte ebenfalls keine Marktreife erreichen. Die Publikation Thermotropic and Thermochromic Polymer Based Materials forAdaptive Solar Control (Solar Control. Materials. 2010; 3(12):5143-5168) gibt einen aktuellen Überblick zur Materialentwicklung für den Sonnenschutz. Thermotrope Polyolefinfilme, basierend auf einem Kern aus einem Alkan und einer Hülle aus Vinylmonomeren, werden diskutiert. Die Stabilität während des Extrusionsprozesses soll durch den Einsatz einer Außenhülle (multiwall) verbessert werden.
Neben bislang ungelösten technologischen Fragestellungen sind sicherlich auch bis in die Gegenwart noch nicht verstandene Reaktionsmechanismen in den eingesetzten thermotropen Systemen - u. a. chemische Konkurrenzreaktionen, Phasenseparationen in Gelen und Blends, Phasenübergänge in PCM - ein wesentlicher Grund für die Verhinderung einer breiten Markteinführung.

Alle bisherigen Systeme sind nicht frei von Migrationseffekten des optisch aktiven Materials in der Polymermatrix, besitzen eine unzureichende chemische und mechanische Stabilität während des Extrusionsprozesses, verfügen über eine mangelnde Adhäsion, was zu Haftungsausfällen führt, sind lichtinstabil oder unterliegen chemischen Abbauprozessen insbesondere bei der Anwendung von biologischen Polymeren wie Stärkemischderivate. Extrusionsstabile Kapseln mit optisch schaltbaren Eigenschaften für die reproduzierbare Herstellung thermotroper Sonnenschutzfolien existieren bislang nicht.

Der Erfindung liegt daher die Aufgabe zugrunde, thermotrope Partikel zu entwickeln, deren spezifische Oberflächestruktur, temperaturabhängige Transluzenz, Dotierbarkeit und Extrusionsstabilität in polymeren Matrices diese für den Einsatz als Sonnenschutz befähigen. Temperaturabhängig wird die Transluzenz des mit dem thermotropen Partikel dotierten Kunststoffes reversibel geschaltet.

Diese Aufgabe wird durch das erfindungsgemäße Verfahren mit den Merkmalen des Anspruchs 1, die thermotropen Partikel mit den Merkmalen des Anspruchs 6 und die dotierten Polymere mit den Merkmalen das Anspruchs 9 gelöst. In Anspruch 13 wird die Verwendung der erfindungsgemäßen dotierten Polymere angegeben. Die weiteren abhängigen Ansprüche zeigen vorteilhafte Weiterbildungen auf.

Erfindungsgemäß wird ein Verfahren zur Herstellung von thermotropen Partikeln für die Dotierung von Polymermatrizes mit folgenden Schritten bereitgestellt:
a. Bereitstellung einer organischen Phase enthaltend mindestens eines für eine Polymerbildung geeigneten Monomers sowie mindestens ein organisches Lösungsmittel,
b. Bereitstellung einer wässrigen Phase enthaltend mindestens ein Tensid und/oder mindestens eine grenzflächenaktive Verbindung,
c. Herstellung einer Dispersion der wässrigen und der organischen Phase durch Mischen der beiden Phasen,
d. ggf. Zugabe mindestens eines Initiators zum Starten der Polymerbildung
e. 1. Stufe der Polymerbildung zur Ausbildung eines im Wesentlichen sphärischen Partikelkerns,
f. 2. Stufe der Polymerbildung zum Einbau von der sphärischen Anordnung abweichenden Ankergruppen in der Oberfläche des Partikelkerns und
g. Isolierung der thermotropen Partikel.

Unter Polymerbildung im Rahmen der vorliegenden Erfindung sind Polymerisationen, insbesondere radikalische und ionische Polymerisationen, sowie Polyadditionen oder Polykondensationen zu verstehen. Unter dem Begriff "von der sphärischen Anordnung abweichende Ankergruppen in der Oberfläche des Partikelkerns" wird verstanden, dass der Partikelkern durch den Einbau von Ankergruppen an seiner Oberfläche eine Oberfläche aufweist, bzw. eine Oberfläche durch Schritt f. erhält, die von seiner sphärischen Anordnung abweicht.

Auf folgende bekannte physiko-chemische Effekte zur gezielten Einflussnahme auf die Materialeigenschaften wird im Wesentlichen zurückgegriffen: i) Optische Anisotropie in polymeren Netzwerken durch partielle Vernetzung (Adv. Mater. 1992, 4, No. 10, 679), ii) Einfluss der Molmasse auf die temperaturgesteuerte Transluzenz (Adv. Mater. 1996, 8, No. 5, 408 und iii) intermolekulare dispersive oder polare Wechselwirkung zwischen grenzflächenaktiven Stoffen (Tensiden) und dem resultierenden optischen Einfluss in polymeren Strukturen (Colloid Polym Sci 272:1151, 1994).

Das integrative Zusammenwirken von optisch anisotropen Netzwerken durch unterschiedlichen Vernetzungsgrad, Verwendung unterschiedlicher Molmassen einer oder unterschiedlicher Polymerstrukturen im System und die Nutzung intermolekularer Wechselwirkung in mindestens dimer aufgebauten Molekülen, eröffnen neuartige Lösungsstrategien zur Materialentwicklung. Hierbei handelt es sich nicht um die Optimierung bekannter technischer Verfahren. Dieser Lösungsansatz stellt eine neue Strategie hinsichtlich der Entwicklung von Funktionsmaterialien dar.

Die Partikel können durch radikalische oder ionische Polymerisation, Polykondensation oder Polyaddition hergestellt werden. Die Startreaktion erfolgt mit klassischen Komponenten wie vorzugsweise Azo-bis-(isobutyronitril), Dibenzoylperoxid, Natriumperoxidsulfat, Lewis-Säuren wie AlCl₃, oder Butyllithium. Die Größe der Partikel lässt sich sowohl kinetisch als auch thermodynamisch kontrollieren. Als technologische Parameter stehen zur Verfügung die gewählte Amplitude bei einer gegeben Frequenz bei Nutzung von Ultraschall oder die Drehzahl bei Nutzung eines Dissolver- oder Turraxgerätes. Die Verwendung verschiedener Ultraschallköpfe bzw. Dispergierwerkzeuge beim Rotator-Stator-Prinzip eröffnen zusätzliche Möglichkeiten, die Partikelgröße zu beeinflussen. Als primäre Arbeitsmethode zur Einstellung der resultierenden Partikelgröße dient die Auswahl und Konzentration des grenzflächenaktiven Stoffes. Wird dieser, wie im Falle einer Emulsionspolymerisation, als Tensid verwendet, so liegt die Konzentration oberhalb der kritischen Micellkonzentration cmc. Die grenzflächenaktiven Stoffe sind ebenfalls geeignet, die Oberflächenstruktur sowohl geometrisch als auch grenzflächenchemisch spezifisch zu beeinflussen. In diesem Fall kann die Konzentration auch unterhalb der cmc liegen, womit keine Micellen gebildet werden können. Das Molekül agiert im System dementsprechend nicht als aggregierter Strukturkomplex, sondern seine physikochemischen Eigenschaften bestimmt das Einzelmolekül. Partikelgröße zwischen 100 nm und 8 µm werden angestrebt, vorzugsweise zwischen 250 nm und 450 nm.

Das Verhältnis zwischen der organischen zur wässrigen Phase in der ersten Polymerisationsstufe befindet sich vorzugsweise im Bereich zwischen 0,6 : 6,3 und 1,5 : 5. Generell sind jedoch alle Mischungsverhältnisse anwendbar, bei denen ein stabiles, d.h. ein zur Ausbildung von polymeren Netzstrukturen befähigtes System im Reaktionsmedium besteht. Verhältnisse von 1:9 bzw. 9:1 können ebenfalls zielführend sein. Der Polymerisationsgrad wird durch das Verhältnis der Einzelkomponenten in der organischen und wässrigen Phase zueinander bestimmt. Die erste Polymerisationsstufe wird durch Zugabe des Initiatormediums gestartet. Die gewählte Temperatur und Reaktionszeit sind weitere Parameter, um den Vernetzungsgrad und die Partikelgröße zu determinieren.

In der zweiten Polymerisationsstufe erfolgt nochmals die Zugabe von Monomerkomponenten. Diese können sowohl identisch sein mit den Komponenten in der ersten Stufe oder auch eine hiervon verschiedene Struktur besitzen. In der ersten Stufe werden neben Monomeren mit aliphatischer Grundstruktur auch Monomere mit aromatischer Grundstruktur bevorzugt verwendet, was sich vorteilhaft auf die Gestaltung und temperaturabhängige Variation des Brechungsindexes der Partikel auswirkt. In der zweiten Stufe werden vorteilhafterweise Monomere verwendet, deren Polymerisation sich besonders gut durch technische Parameter wie Temperatur und Zeit steuern lassen. Ein Teil der Monomere muss nicht zwingend umgesetzt werden, er verbleibt als Monomereinheit integriert im Polymernetzwerk. Die verbleibenden reaktiven Gruppen des Monomers sind befähigt, die Oberflächengeometrie des Partikels zu verändern und sind zudem zu Folgereaktionen mit grenzflächenaktiven Stoffen in der Lage. Bei weiterer Zugabe von grenzflächenaktiven Stoffen bleibt die Konzentration unterhalb der cmc. Somit wird der Aufbau einer geschlossenen Hülle um das bereits vorliegende pre-Partikel im Reaktionsmedium verhindert. Die Substanz dient in diesem Reaktionsschritt explizit nicht als Tensid, sondern zur strukturellen geometrischen und physikochemischen Veränderung der Oberflächenstruktur.

Die Reaktionszeit für beide Stufen beträgt 30 Minuten bis 4 Stunden bei einer Temperatur zwischen 40°C und 90°C. Die Ausbeute an thermotropen Partikelmaterial ist erheblich größer 90%. Durch veränderte Stoffmengen und Wärmeregulation können deutliche Abweichungen für die erforderliche Reaktionszeit und in der Ausbeute bestehen.

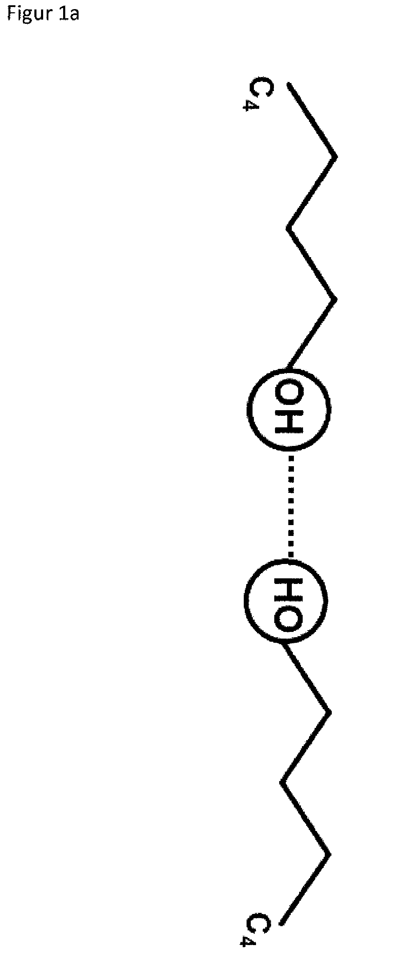

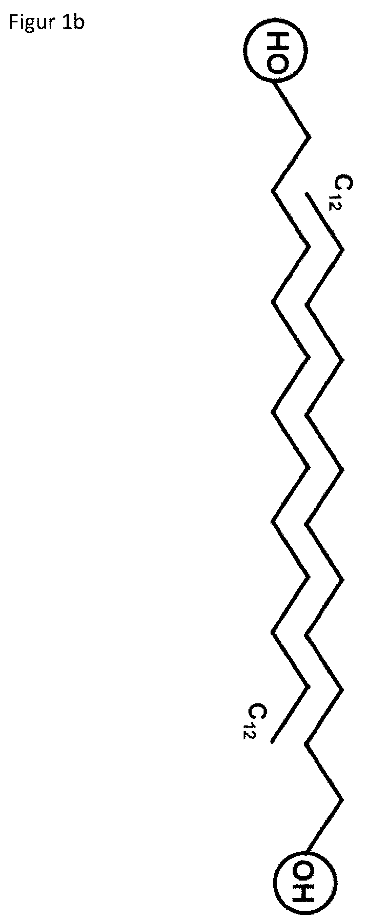

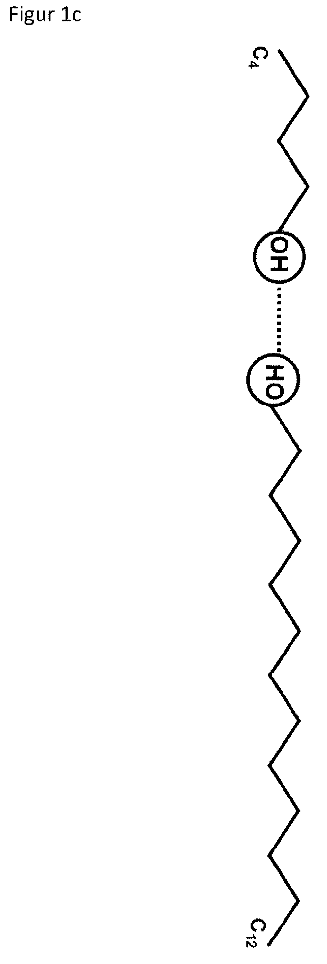

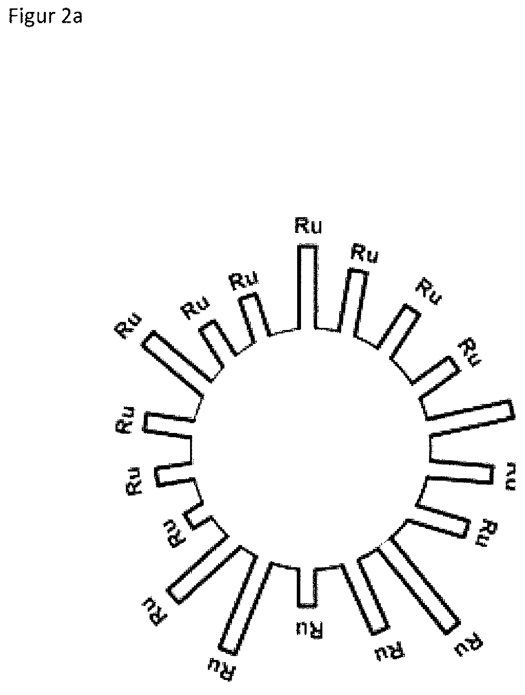

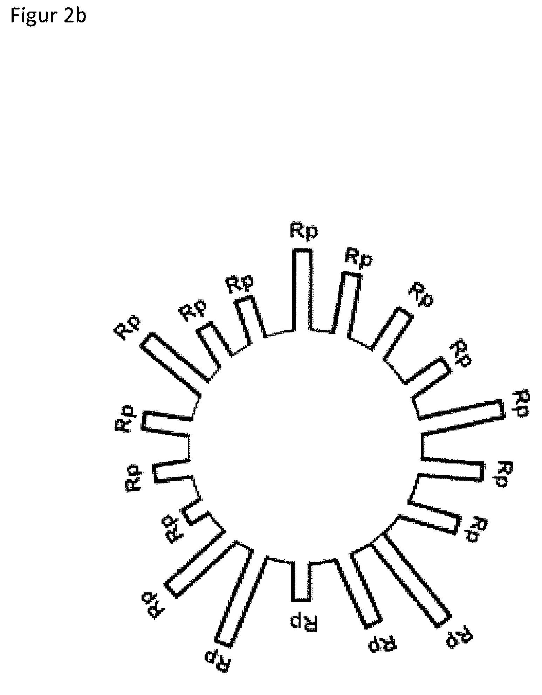

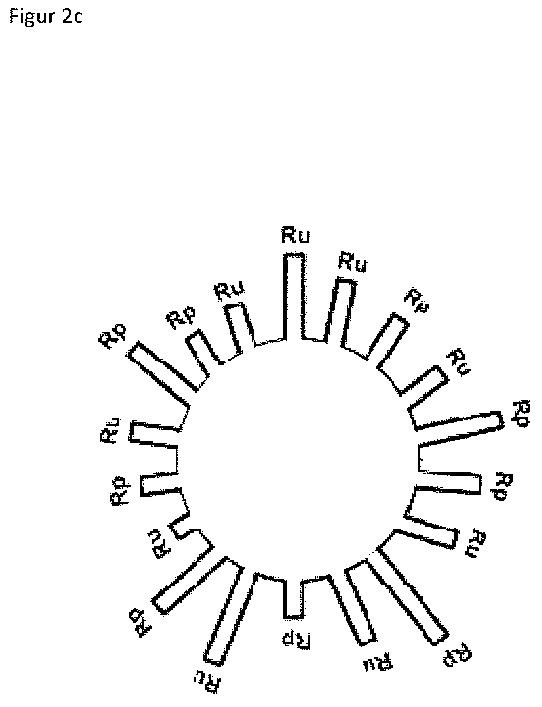

Neben dem Einsatz von Einzelmolekülen sind auch Dimere oder darüber hinaus komplexe Molekülverbindungen als grenzflächenaktive Stoffe geeignet. Besonders geeignet hierfür sind homologe Reihen von funktionalisierten Paraffinstrukturen. So werden kurzkettige Alkohole wie Butanol miteinander intermolekular vorzugsweise über die polare Alkoholgruppe in Wechselwirkung treten. Die dispersiven Kräfte der relativ kurzen CH₂-Kette sind nicht stark ausgebildet Die polaren Hydroxylgruppen beider Moleküle sind durch ihre gegenseitige Wechselwirkung gebunden, sie sind im System neutralisiert. Nach außen wirken nunmehr die freien Valenzen des dispersiven CH₂-Molekülanteiles. Die Ankergruppen R sind wie in Figur 2a in einem derartigen Fall vorzugsweise unpolarer Natur Rᵤ, und Figur 1a (mit Hydroxylgruppe-OH und vier CH₂-Einheiten). Ein anderes Verhalten zeigen langkettige Alkohole wie Lauryl- oder Octadecylalkohol. Hier können die ausgeprägten dispersiven Kräfte in Konkurrenz zur Wechselwirkung mit der funktionellen Hydroxylgruppe treten. Die Wechselwirkung erfolgt über die CH₂-Struktur, womit nach außen die Hydroxylgruppen das physikochemische Verhalten im Wesentlichen bestimmen (Figur 1b), demenstsprechend sind die Ankergruppen polarer Natur Rₚ. Figur 2b. Für den Fachmann ist leicht erkennbar, dass dieser Effekt in vielfältigen Varianten einsetzbar ist. Die Kombination von Molekülen mit unterschiedlichster Struktur ist möglich, Figur 1c. Die wichtigsten sind die Variation der CH₂-Kette, der Einsatz verschiedener funktioneller Gruppen wie z.B Alkohol, - Amin-, Amid-, Sulfonat- oder Säuregruppen zueinander sowohl in intra- als auch intermolekularer Weise oder die Wechselwirkung unterschiedlicher funktioneller Gruppen. Ein Bauprinzip, wie es in der Biowissenschaft perfektioniert ist (Angew. Chem. 104, 1990, 1310). Das Partikel kann also auch über polare Rₚ und unpolare Rᵤ verfügen wie in Figur 2c dargestellt. Die Funktionsweise der Ankergruppen kann bereits durch eine monomolekulare Struktur realisiert werden. Treten die grenzflächenaktiven Stoffe mit dem pre-Partikel in Wechselwirkung, können diese nun zielgerichtet über die polare funktionelle Gruppe oder den dispersiven Molekülteil agieren.

Alternativ, oder auch in Kombination mit niedermolekularen Verbindungen, können auch polymere Substanzen wie Polyole oder Polyvinylalkohol als grenzflächenaktive Stoffe verwendet werden. Werden Polymere mit stark variierender Molmasse jedoch der gleichen oder ähnlichen Struktur, wie beispielsweise Polyole, Polyetherpolyol, Polyesterpolyol, Polyvinylalkohol mit unterschiedlichem Hydrolysegrad in einem selbstorientierenden System in Wechselwirkung gebracht, so kann die Transluzenz temperaturabhängig gesteuert werden. Der Effekt kann hierbei sowohl auf einer Phasenseparation als auch auf einen Phasenübergang in einem anisotropen System beruhen; in der Folge wird der Brechungsindex des Gesamtsystems für das Auge sichtbar geändert.

Der Einsatz der grenzflächenaktiven Stoffe oder Tenside in Stufe 1 oder Stufe 2 entscheidet darüber, ob die Komponenten vorzugsweise im Netzwerkvolumen eingebaut werden oder in der Oberfläche positioniert sin. Die Integration im Volumen zielt vornehmlich auf die unmittelbare Gestaltung des Brechungsindexes, wogegen die Positionierung an der Oberfläche deren physikochemische Eigenschaft determiniert.

Mit der Steuerung des Vernetzungsgrades auf der einen Seite und die determinierte Integration von nicht umgesetzten Monomeren im Partikel auf der anderen Seite steht ein weiteres Werkzeug zur Gestaltung des Partikels und seiner Oberfläche zur Verfügung. Ein vergleichsweise hoher Vernetzungsgrad und geringer Anteil verbleibender Monomere reduziert die Anzahl aktiver chemischer und sterischer Zentren. In idealer Weise kann durch den Charakter der pre-Partikel und grenzflächenaktiven Stoffe, sowie deren Wechselwirkung, das thermotrope Endpartikel gefertigt werden. Die Isolation der Partikel erfolgt durch geläufige Technologien.

Wird für die Polymerisation ein spezifischer pH-Wert benötigt, so kann dieser mit den hierfür bekannten Pufferlösungen eingestellt werden. Als Polymerisationsstarter können u.a. verwendet werden: Dibenzoylperoxid, Na-Peroxidisulfat, Azo-bis-(isobutyronitril) oder HBF₄.

Vorzugsweise ist das Monomer ausgewählt aus der Gruppe der Vinylverbindungen, Acrylate, Diole, Diamine, Phenole, Aldehyde, Dicarbonsäuren und Mischungen hiervon, insbesondere Adipinsäure, Hexamethylendiamin, para-Phenyldiamin, Terephthalsäure, Sebacinsäure und Derivate, Lysin, Arginin, Histidin, Asparaginsäure, Glutaminsäure, Bismalinimid und Derivate, Hydrazin und Derivate, Harnstoff und Derivate, Styrol, Vinylchlorid, Vinylacetat, Alkylvinylester, Isopropenylacetat, Acrylnitril, Acrylsäureester, Methylmethacrylat, Octadecylacrylat, Hydroxyethylacrylat, Allylmethacrylat, Ethylacrylat sowie Mischungen hiervon.

Die Tenside und/oder grenzflächenaktiven Verbindungen sind vorzugsweise ausgewählt aus der Gruppe bestehend aus Alkylbenzosulfonate, Alkansulfonate wie Natriumdodecylsulfonat, Fettalkoholsulfonate wie Natriumlaurylsolfonat, Succinate wie Natrium-1,4-bis(2-ethylhexoxy)-1,4-dioxobutan-2-sulfonat, Dodecylbenzylsulfonsäure, Sulfobetaine wie Pyridinium-propyl-Sulfobetain, Pyridinium-Hydroxyl-propyl-sulfobetain, Lauryl-sulfobetain, Dodecyl- und Decylalkylcarboxylat, Na-lauryl-glucose-carboxylat, Diole, Triole, Polyole, Diamine, Triamine, Dicarbonsäuren, Aminosäuren, Butandiol, Butindiol, Butendiol, n-Butylamide, Butendiamin, Hexamethylendiamin, Laurylalkohol, Decylalkohol, Tetradecylalkohol, Stearylalkohol, Stearylsäure, Stearylsulfonat, Erucasäure, Hexadecylamin, 1,16-Hexadecyldiamin, Polyole wie Voranol P400 (Molmasse 400), Voranol CP 6055 (Molmasse 6000), Voranol RA 800 (Molmasse 280), Polyethylenglycol 400, Polyethylenglycol 800, Amino-PEG-Säuren wie Alpha-[3-(o-Pyridaldisulfido)prapanolamido]-omega-succinimidester -octa(ethylene glycol) oder Bzl-O-dPEG(4)-COOH, WO-PEG(24)-CO-tBu, tBu-O2C-PEG(12)-COOH, Methoxy-polyethylenglycol, 4-Nonylphenyl-polyethylenglycol, Polyvinylalkohol, PVA voll hydrolysiert-Molmasse 70T, PVA voll hydrolysiert-Molmasse 200T, PVA 98% hydrolysiert-Molmasse 27T, PVA 88% hydrolysiert 125T und Mischungen hiervon.

Bei Voranol P400, Voranol CP und/oder Voranol RA 800 handelt es sich um Gemische aus mehrstrahligen Polyethern bestehend aus Polyethylenoxid und Ethylenoxid.

Das Verhältnis zwischen der organischen und wässrigen Phase, bezogen auf die Gewichtsanteile, liegt bevorzugt im Bereich von 1:9 bis 9:1, besonders bevorzugt im Bereich von 1,5 bis 5.

Erfindungsgemäß werden ebenso thermotrope Partikel für die Dotierung einer Polymermatrix bereitgestellt, die einen im Wesentlichen sphärischen Partikelkern und, an der Oberfläche des Partikelkerns angeordnet, von der sphärischen Anordnung abweichenden Ankergruppen aufweisen, wobei die Polarität der Ankergruppen und der Polymermatrix weitgehend identisch ist. Ein Maß hierfür ist die Grenzflächenspannung. Die Differenz der Grenzflächenspannung der Ankergruppe im Vergleich zur Grenzflächenspannung der Polymermatrix beträgt bevorzugt maximal 25 m/Nm, besonders bevorzugt maximal 5 m/Nm. Die Werte beinhalten hier sowohl den polaren und dispersiven Anteil. Die Grenzflächenspannung läßt sich einfach bestimmen mit einem Krüss G40 (software BP21, K121, K122). Die Partikel sind dabei nach dem zuvor beschriebenen Verfahren herstellbar.

Die erfindungsgemäßen Partikel weisen eine vernetzte Polymerstruktur mit thermotropen optischen Eigenschaften auf, wobei die Oberfläche der Partikel, ähnlich wie bei einem Virus, mit Ankergruppen versehen ist. Diese aus der sphärischen Partikelform herausreichenden Ankergruppen können sowohl hydrophoben und/oder hydrophilen Charakter besitzen.

Erfindungsgemäß wird somit auf den aus dem Stand der Technik bekannten Aufbau einer klassischen Kapsel mit Kern und Hülle/Schale verzichtet. Zudem wird die räumliche Kugelgeometrie durch zusätzliche Ankergruppen mit spezifischen Haftungseigenschaften zur Polymermatrix aufgehoben. Die Wechselwirkung zwischen Partikel und Matrix basiert, im Gegensatz zu klassischem Kapseln, in diesem Fall nicht nur auf chemische Einflüsse sondern auch auf Oberflächenstruktureigenschaften; ein Mechanismus wie er auch in der Biowissenschaft genutzt wird. Vorteilhafterweise können die Ankergruppen zudem auch unterschiedlichster Struktur sein. Somit können sowohl polare als auch dispersive Kräfte in die Wechselwirkung zwischen Partikel und Matrix einbezogen werden. Migrationseffekten kann somit erstmalig zielgerichtet entgegengewirkt werden.

Das thermotrope Partikel besteht aus einem vernetzten Polymer. Die Vernetzung kann einen unterschiedlichen Grad besitzen, wodurch sich die Elastizität des thermotropen Materials zielgerichtet beeinflussen lässt. Die Vernetzung muss nicht quantitativ erfolgen. Ein Teil der Monomere kann unumgesetzt bleiben und somit die mechanischen und optischen Eigenschaften spezifisch beeinflussen. Die neuartigen elastischen Eigenschaften der Partikel ermöglichen deren Einsatz in der Extrusionstechnologie bei der Verarbeitung thermoplastischer Materialien. Darüber hinaus kann das thermotrope Partikelmaterial ebenfalls in Duromere, Harzsysteme, Lacke/Coatings, der Gießtechnik oder auch in einem Sol-Gel-Verfahren zum Einsatz gelangen.

Die reversible Schaltung von einem optisch klaren in einen transluzenten Zustand mit Temperaturerhöhung beruht auf einer Änderung des Brechungsindex n_{Dp} des Partikels; der Brechungsindex der Polymermatrix n_{Dm} bleibt dagegen weitestgehend konstant. Sind beide Brechungsindices bei Raumtemperatur beinahe identisch, wird ein transparenter, klarer Zustand erreicht, der mit temperaturgesteuerter Brechungsindexerniedrigung des Partikels in einen transluzenten, trüben Zustand übergeht. Bei entsprechender Abstimmung des temperaturabhängigen Brechungsindexes des Partikels mit Bezug zum Brechungsindex der Matrix lässt sich auch ein reversibles Schaltverhalten von trüb nach klar oder trüb-klar-trüb einstellen. Für den Fachmann ist leicht ersichtlich, dass hier alle Möglichkeiten der optischen Gesetzmäßigkeiten genutzt werden können.

Die erfindungegemäßen thermotropen Partikel können in Form eines Pulvers, Compounds oder Masterbatchs in eine Polymermatrix dotiert werden. Der Dotierungsgrad kann bevorzugt von 0,2 Gew.% bis 48 Gew.%, besonders bevorzugt von 3% bis 11% betragen. Bei Temperaturänderung bleibt der Brechungindex der Polymermatrix weitestgehend konstant, während sich der Brechungsindex des thermotopen Partikels ändert. Im Resultat ändert sich die Transluzens des Kunststoffes, womit sich das Material für den adaptiven Sonnenschutz eignet; der thermotrope Schaltprozess ist reversibel. Eine besondere Effizienz hinsichtlich seiner Sonnenschutzeigenschaften bekommt das Material durch die Rückstreuung eines beträchtlichen Teils der elektromagnetischen Strahlung.

Die erfindungsgemäßen Eigenschaften des Partikels gestatten die Dotierung in unterschiedlichste Matrices. Diese können aliphatischer, aromatischer, hydrophiler oder hydrophober Natur sein. Lacke, Gießharze, Duromere oder Thermoplasten können dotiert werden. Die Anforderungen des Endproduktes bestimmen den Dotierungsgrad, der zwischen 0.5 und 35 Gew% liegen kann. Für die Verwendung in Sonnenschutzmaterialien wird ein Dotierungsgrad zwischen 3 und 25 Gew% bevorzugt. Die Einlagerung von verschiedenen thermotropen Partikeln mit unterschiedlicher Schalttemperatur, zwei oder mehr, in einer Polymermatrix ist bei Bedarf möglich. Die Elastizität, bedingt durch den Verzicht auf eine quantitative Polymerisationsreaktion und die Einlagerung von Monomeren sowie der Verzicht auf eine Hüllenstruktur wie bei klassischen Mikro-Nanokapseln, befähigt die Partikel für die Extrusionstechnik.

Anhand der nachfolgenden Figuren und Beispiele soll der erfindungsgemäße Gegenstand näher erläutert werden, ohne diesen auf die hier gezeigten spezifischen Ausführungsformen einschränken zu wollen.

In Fig. 1a), b) und c) werden anhand schematischer Darstellungen mögliche Ankergruppen und deren Wechselwirkungen gezeigt.

In Fig. 2 a), b) und c) werden schematisch erfindungsgemäße thermotrope Partikel mit unpolaren Ankergruppen (Fig. 2 a)), polaren Ankergruppen (Fig. 2 b)) sowie einer Kombination von polaren und unpolaren Ankergruppen (Fig. 2 c)).

### Beispiel 1

### Thermotrope Polymerfolie

Die organische Phase wird gebildet aus Octadecylacrylat, 1-Octadecan und Vinylacetat wobei der Octadecylacrylatanteil im Verhältnis von 7:2,5:0,5 Gew.% In der wässrigen Phase befinden sich Laurylsulfobetain, 1-Butanol und 1-Hexanol und Natriumhydrogensulfat als pH-Puffer im Verhältnis von 0.8:48:48:3,2 Gew.%. Der Wasseranteil ist größer 96 Gew.%. Beide Phasen werden im Wasserbad bei ca. 50°C unter Rühren temperiert. Eine wässrige Initiatorlösung mit AIBN wird vorbereitet.

In der ersten Stufe werden die wässrige und organische Phase vereint, das Verhältnis zueinander ist 4:1. Unmittelbar anschließend wird das Gemisch mit dem Ultra-Turrax 3 Minuten behandelt bei 17.000 U/min. Das Gemisch wird in einen Kolben überführt und innerhalb von 30 min von 50°C auf 80°C unter Rühren erwärmt. Der Kolben wird mit Stickstoff gespült und ist mit einem Rückflusskühler bestückt. Nach weiteren 15 min erfolgt die Zugabe der Natrium-Peroxidsulfat-Initiatorlösung. Das Reaktionsgemisch wird kurzzeitig auf 90°C erwärmt und anschließend wieder auf 80°C gekühlt. Nach einer Reaktionszeit von 70 min wird die zweite Stufe durch Zugabe eines Gemisches Octadecylacrylat : Methylmethacrylat mit 20 : 1 zugetropft, die Temperatur bleibt unverändert. Anschließend wird weiter 85 min gerührt bei konstanten 80°C. Die Reaktion ist abgeschlossen, die Lösung wird auf Raumtemperatur abgekühlt und über Nacht stehen gelassen. Die Suspension lässt sich filtrieren. Die Ausbeute der thermotropen Partikel beträgt 82%. Die Partikelgröße liegt im Wesentlichen im Bereich von 600 nm bis 2 µm.
Im Folgeschritt werden die thermotropen Partikel in einem Zweischneckenextruder mit Polyethylen zu einem Compound verarbeitet. Der Partikelanteil beträgt 5,5 Gew.%. In einem anschließenden Flachfolienextrusionsverfahren wird eine thermotrope Polyethylenfolie des Types LD mit einer Schichtdicke von 155 µm hergestellt.

Mit Temperaturerhöhung erniedrigt sich die Transparenz. Ein reversibler Schalthub von ΔT ≈ 37% wird erreicht. Der Anteil der Rückstrahlung an der solaren Strahlung beträgt 18%.

Die Folie ist geeignet für den Einsatz als adaptiver Sonnenschutz. Die temperaturgesteuerte Schaltung zwischen den unterschiedlichen transluzenten Moden bedarf keiner externen Energiequellen. Die Schaltung erfolgt durch den Eintrag der Solarstrahlung. Der Prozess ist reversibel.

### Beispiel 2

### Thermotrope Folie

Die organische Phase wird gebildet aus Polyvinylalkolhol, Octadecylacrylat und 1-Octadecan im Verhältnis von 0,8: 7,5: 2 Gew%. In der wässrigen Phase befinden sich Natrium-1,4-bis (ethhylhexoxy)-1,4-dioxobutan-2-sulfonat, Laurylalkohol, 1-Hexanol und Citrionensäure/Natriumhydroxid als pH-Puffer im Verhältnis von 1.6:52,4:42:4 Gew.%. Der Wasseranteil ist größer 94 Gew.%. Beide Phasen werden im Wasserbad bei ca. 50°C unter Rühren temperiert. Das weitere Verfahren erfolgt wie in Beispiel 1. Die Partikelgröße liegt im Bereich von 500 nm bis 2,3 µm.

Im Folgeschritt werden die thermotropen Partikel in einem Zweischneckenextruder mit dem Copolymer Ethylen-Butylacrylat zu einem Compound verarbeitet. Der Partikelanteil beträgt 12,5 Gew.%. In einem anschließenden Flachfolienextrusionsverfahren wird eine thermotrope Folie mit einer Schichtdicke von 190 µm hergestellt.

Mit Temperaturerhöhung erniedrigt sich die Transparenz. Ein reversibler Schalthub von ΔT ≈ 41% wird erreicht. Der Anteil der Rückstrahlung an der solaren Strahlung beträgt 23%.

Für den Fachmann ist ersichtlich, dass es eine Vielzahl von Einflussgrößen gibt, die das thermotrope Verhalten des Kunststoffes, der mit dem Partikelmaterial dotiert ist, beeinflussen zu können. Hierzu gehören u.a die Abstimmung des Brechungsindexes zwischen Polymermatrix und Partikel, der Dotierungsgrad, die Partikelgröße und deren Verteilung oder die Schichtdicke des Kunststoffes. Diese beträgt bei einem Lack 0.2 - 10 µm, einer Laminatfolie 20 - 200 µm, einer Klebefolie 50 - 220 µm, einer Stegplatte 200µm - 2.5 cm.

Die vielfältige Variation der thermotropen Eigenschaften durch Technologieeinflüsse, wie Dotierungsgrad, Partikelgröße und Verteilung oder stoffliche Auswahl der Komponenten ermöglicht eine breite Anwendung für den Sonnenschutz; einschließlich Agrarfolien. Temperaturgesteuerte Schaltübergange im Bereich zwischen 25°C und 36°C sind bevorzugt für smart windows in Europa, Schalttemperaturen von 30°C bis 46°C für südlicher gelegene Länder. Werden thermotrope Materialien als Überhitzungsschutz in Sonnenkollektoren verwendet, sind Schalttemperaturen oberhalb 60°C, vorzugsweise bei 80°C, gefordert.

Für unpolare Polymermatrices wie beispielsweise Polyolefine sind Ankergruppen bevorzugt mit ebenfalls unpolarer Natur; favorisiert hierfür sind CH₂-Ketten. Entsprechend werden für polare Matrices polare Ankergruppen bevorzugt. Geeignet hierfür sind beispielsweise Hydroxyl-, Amin-, Carboxyl-, Sulfonat-, Phoshat- oder Anhydridgruppen. Es soll aber explizit erwähnt werden, dass Partikel mit sowohl polaren als auch unpolaren Ankergruppen die Funktion zur Haftung mit der Polymermatrix, unabhängig ob diese polar oder unpolar ist, erfüllen. Entscheidend sind die Ankergruppen, die die Haftung durch physikochemische Wechselwirkung ermöglichen.

Nur wenn die Polarität der Ankergruppen so eingestellt werden kann, dass diese der Polarität der Polymermatrix weitestgehend entspricht, kann die Migration der thermotropen Partikel erfolgreich unterbunden werden. Als physikalischer Parameter dient hierfür die Grenzflächenspannung y mit ihrem polaren und dispersiven (unpolaren) Anteil.

Somit wird ersichtlich, dass eine spezifische polymere Matrixstruktur auch eine spezifische Oberfläche der thermotropen Partikel benötigt. Für unpolare Polyolefinfolien sind Partikel mit einem Anteil von über 90% unpolarer Ankergruppen vorteilhaft. Mit ansteigender Polarität in der Polymermatrix müssen entsprechend Partikel mit einem höheren polaren Anteil verwendet werden. Wird als Polymermatrix z. B das Copolymer Ethylen-Butylacrylat (mit ca. 12% Acrylat) eingesetzt wird ein Partikel mit höherem polaren Anteil von ca. 20% verwendet; der unpolare Anteil an der Oberfläche der Ankergruppen reduziert sich entsprechend auf ca. 80%. In Stegplatten aus Plexiglas werden Partikel mit vorzugsweise bis zu 60% polaren Ankergruppen an der Oberfläche verwendet. Für Lacke und Duromere werden Partikel mit polaren Ankergruppen von ca. 60-70% bzw. oberhalb 80% verwendet. Für ein Epoxidharz aus Bisphenol und Epichlorhydrin (Härter Araldite MY721, 2,2-dimethyl-4,4-methylen-bis (cyclohexylamin) beträgt der Anteil der polaren Ankergruppen ca. 92% und der unpolaren 8%. Bei der Herstellung von thermotropen Lacken durch Dotierung mit den erfindungsgemäßen Partikeln hat das Reaktionsmedium - wasserbasierend oder basierend auf organischen Lösungsmitteln - einen zusätzlichen Einfluss auf die Auswahl des Verhältnisses zwischen unpolaren und polaren Ankergruppen. Technologiebedingt werden unpolare Ankergruppen in einem wässrigen Medium, welches anschließend verdampft wird, bevorzugt. Ihr Anteil liegt hier oberhalb 50%, vorzugsweise zwischen 78-99%. Werden Partikel mit einem hohem polaren Anteil für thermotrope Lackschichten benötigt, ist eine Verfahrensweise in unpolaren organischen Lösungsmitteln, die anschließend verdampft werden, zu bevorzugen.

## Patentansprüche

1. Verfahren zur Herstellung von thermotropen Partikeln für die Dotierung von Polymermatrizes mit folgenden Schritten:
a. Bereitstellung einer organischen Phase enthaltend mindestens eines für eine Polymerbildung geeigneten Monomers sowie mindestens ein organisches Lösungsmittel,
b. Bereitstellung einer wässrigen Phase enthaltend mindestens ein Tensid und/oder mindestens eine grenzflächenaktive Verbindung,
c. Herstellung einer Dispersion der wässrigen und der organischen Phase durch Mischen der beiden Phasen,
d. ggf. Zugabe mindestens eines Initiators zum Starten der Polymerbildung,
e. 1. Stufe der Polymerbildung zur Ausbildung eines im Wesentlichen sphärischen Partikelkerns,
f. 2. Stufe der Polymerbildung zum Einbau von der sphärischen Anordnung abweichenden Ankergruppen in der Oberfläche des Partikelkerns und
g. Isolierung der thermotropen Partikel.

2. Verfahren nach Anspruch 1,
**dadurch gekennzeichnet, dass** Monomer ausgewählt ist aus der Gruppe der Vinylverbindungen, Acrylate, Diole, Diamine, Phenole, Aldehyde, Dicarbonsäuren und Mischungen hiervon, insbesondere Adipinsäure, Hexamethylendiamin, para-Phenyldiamin, Terephthalsäure, Sebacinsäure und Derivate, Lysin, Arginin, Histidin, Asparaginsäure, Glutaminsäure, Bismalinimid und Derivate, Hydrazin und Derivate, Harnstoff und Derivate, Styrol, Vinylchlorid, Vinylacetat, Alkylvinylester, Isopropenylacetat, Acrylnitril, Acrylsäureester, Methylmethacrylat, Octadecylacrylat, Hydroxyethylacrylat, Allylmethacrylat, Ethylacrylat sowie Mischungen hiervon.

3. Verfahren nach einem der vorhergehenden Ansprüche,
**dadurch gekennzeichnet, dass** die Tenside und/oder grenzflächenaktiven Verbindungen ausgewählt sind aus der Gruppe bestehend aus Alkylbenzosulfonate, Alkansulfonate wie Natriumdodecylsulfonat, Fettalkoholsulfonate wie Natriumlaurylsolfonat, Succinate wie Natrium-1,4-bis(2-ethylhexoxy)-1,4-dioxobutan-2-sulfonat, Dodecylbenzylsulfonsäure, Sulfobetaine wie Pyridinium-propyl-Sulfobetain, Pyridinium-Hydroxyl-propyl-sulfobetain, Lauryl-sulfobetain, Dodecyl- und Decylalkylcarboxylat, Na-lauryl-glucosecarboxylat, Diole, Triole, Polyole, Diamine, Triamine, Dicarbonsäuren, Aminosäuren, Butandiol, Butindiol, Butendiol, n-Butylamide, Butendiamin, Hexamethylendiamin, Laurylalkohol, Decylalkohol, Tetradecylalkohol, Stearylalkohol, Stearylsäure, Stearylsulfonat, Erucasäure, Hexadecylamin, 1,16-Hexadecyldiamin, Polyole, insbesondere Voranol P400 (Molmasse 400), Voranol CP 6055 (Molmasse 6000), Voranol RA 800 (Molmasse 280), Polyethylenglycol 400 oder Polyethylenglycol 800, Amino-PEG-Säuren, insbesondere Alpha-[3-(o-Pyridoldisulfido)propanolamido]-omega-succinimidester - octa(ethylene glycol) oder Bzl-O-dPEG(4)-COOH, HO-PEG(24)-CO-tBu, tBu-O2C-PEG(12)-COOH, Methoxy-polyethylenglycol, 4-Nonylphenylpolyethylenglycol, Polyvinylalkohol, PVA voll hydrolysiert-Molmasse 70T, PVA voll hydrolysiert-Molmasse 200T, PVA 98% hydrolysiert-Molmasse 27T, PVA 88% hydrolysiert 125T und Mischungen hiervon.

4. Verfahren nach einem der vorhergehenden Ansprüche,
**dadurch gekennzeichnet, dass** das Verhältnis zwischen der organischen und wässrigen Phase, bezogen auf die Gewichtsanteile, im Bereich von 1:9 bis 9:1, insbesondere im Bereich von 0,6 : 6,3 bis 1,5 : 5 liegt.

5. Verfahren nach einem der vorhergehenden Ansprüche,
**dadurch gekennzeichnet, dass** die Polymerbildung eine radikalische Polymerisation, eine Polyaddition oder eine Polykondensation ist.

6. Thermotrope Partikel für die Dotierung einer Polymermatrix mit einem im Wesentlichen sphärischen Partikelkern und, an der Oberfläche des Partikelkerns angeordnet, von der sphärischen Anordnung abweichenden Ankergruppen, wobei sich die Grenzflächenspannung der Ankergruppen (γ_{A}) sich von der Grenzflächenspannung der Polymermatrix (γ_{P}) um maximal 25m/Nm, insbesondere um maximal 5m/Nm unterscheidet und die Partikel nach dem Verfahren nach einem der vorhergehenden Ansprüche herstellbar sind.

7. Thermotrope Partikel nach Anspruch 6,
**dadurch gekennzeichnet, dass** die Partikel einen Durchmesser von 100 nm bis 2 µm, insbesondere von 250 nm bis 450 nm aufweisen.

8. Thermotrope Partikel nach einem der Ansprüche 6 oder 7,
**dadurch gekennzeichnet, dass** die thermotrope Schaltung der Partikel reversibel verläuft in einem Temperaturbereich von 25°C bis 80°C.

9. Dotierte Polymere enthaltend eine Polymermatrix mit thermotropen Partikeln nach einem der Ansprüche 6 bis 8.

10. Dotierte Polymere nach Anspruch 9,
**dadurch gekennzeichnet, dass** die Polymermatrix von 0,2 bis 48 Gew%, insbesondere von 3 bis 25 Gew.%, der thermotropen Partikel enthält.

11. Dotierte Polymere nach Anspruch 9 oder 10,
**dadurch gekennzeichnet, dass** die Polymermatrix ein Lack, Coating, Harz, Duromer oder Thermoplast ist.

12. Dotierte Polymere nach einem der Ansprüche 9 bis 11,
**dadurch gekennzeichnet, dass** die Polymermatrix mindestens zwei thermotrope Partikel mit unterschiedlicher Schalttemperatur enthält.

13. Verwendung der dotierten Polymere nach einem der Ansprüche 9 bis 12 für den Sonnenschutz und zur Abschattung.

## Claims

1. A process for the preparation of thermotropic particles for doping polymer matrices is provided, comprising the steps of:
a. providing an organic phase containing at least one monomer suitable for polymer formation, and at least one organic solvent;
b. providing an aqueous phase containing at least one surfactant and/or at least one surface-active compound;
c. preparing a dispersion of the aqueous and organic phases by mixing the two phases;
d. optionally adding at least one initiator to start the polymer formation;
e. 1st stage of polymer formation to form a substantially spherical particle core;
f. 2nd stage of polymer formation to incorporate anchor groups deviating from the spherical arrangement in the surface of the particle core; and
g. isolating the thermotropic particles.

2. The process according to claim 1,
**characterized in that** said monomer is selected from the group of vinyl compounds, acrylates, diols, diamines, phenols, aldehydes, dicarboxylic acids, and mixtures thereof, in particular adipic acid, hexamethylenediamine, p-phenylenediamine, terephthalic acid, sebacic acid and derivatives thereof, lysine, arginine, histidine, aspartic acid, glutamic acid, bis(maleic imide), and derivatives, hydrazine and derivatives thereof, urea and its derivatives, styrene, vinyl chloride, vinyl acetate, alkyl vinyl ester, isopropenyl acetate, acrylonitrile, acrylic acid esters, methyl methacrylate, octadecyl acrylate, hydroxyethyl acrylate, allyl methacrylate, ethyl acrylate, and mixtures thereof.

3. The process according to either of the preceding claims, **characterized in that** said surfactants and/or surface-active compounds are selected from the group consisting of alkylbenzenesulfonates, alkane sulfonates, such as sodium dodecyl sulfonate, fatty alcohol sulfonates, such as sodium laurylsulfonate, succinates, such as sodium 1,4-bis(2-ethylhexoxy)-1,4-dioxobutane-2-sulfonate, dodecylbenzylsulfonic acid, sulfobetaines, such as pyridinium propyl sulfobetaine, pyridinium hydroxy propyl sulfobetaine, lauryl sulfobetaine, dodecyl- and decylalkyl carboxylate, Na lauryl-glucose carboxylate, diols, triols, polyols, diamines, triamines, dicarboxylic acids, amino acids, butane diol, butyne diol, butene diol, n-butylamides, butenediamine, hexamethylene diamine, lauryl alcohol, decyl alcohol, tetradecyl alcohol, stearyl alcohol, stearylic acid, stearyl sulfonate, erucic acid, hexadecylamine, 1,16-hexadecyldiamine, polyols, such as Voranol P400 (molecular weight 400), Voranol CP 6055 (molecular weight 6000), Voranol RA 800 (molecular weight 280), polyethylene glycol 400, polyethylene glycol 800, amino-PEG acids, such as alpha-[3-(o-pyridoldisulfido)-propanolamido]-omega-succinimide ester octa(ethylene glycol), or Bzl-O-dPEG(4)-COOH, HO-PEG(24)-CO-tBu, tBu-O2C-PEG(12)-COOH, methoxy polyethylene glycol, 4-nonylphenyl polyethylene glycol, polyvinyl alcohol, fully hydrolyzed PVA (molecular weight 70,000), fully hydrolyzed PVA (molecular weight 200,000), 98% hydrolyzed PVA (molecular weight 27,000), 88% hydrolyzed PVA (125,000), and mixtures thereof.

4. The process according to any of the preceding claims, **characterized in that** the ratio of the organic to the aqueous phase, based on the weight proportions, is within a range of from 1:9 to 9:1, especially within a range of from 0.6:6.3 to 1.5:5.

5. The process according to any of the preceding claims, **characterized in that** the polymer formation is a free-radical polymerization, polyaddition or polycondensation.

6. Thermotropic particles for doping a polymer matrix with a substantially spherical particle core and, arranged at the surface of the particle core, anchor groups deviating from the spherical configuration, wherein the interfacial tension of the anchor groups (γ_{A}) differs from the interfacial tension of the polymer matrix (γ_{P}) by not more than 25 m/Nm, especially by not more than 5 m/Nm, and the particles can be prepared by the process according to any of the preceding claims.

7. Thermotropic particles according to claim 6, **characterized in that** said particles have diameters of from 100 nm to 2 µm, especially from 250 nm to 450 nm.

8. Thermotropic particles according to either of claims 6 or 7, **characterized in that** the thermotropic switching of the particles is reversible and takes place within a temperature range of from 25 °C to 80 °C.

9. Doped polymers containing a polymer matrix with thermotropic particles according to any of claims 6 to 8.

10. Doped polymers according to claim 9, **characterized in that** said polymer matrix contains from 0.2 to 48% by weight, especially from 3 to 25% by weight, of said thermotropic particles.

11. Doped polymers according to claim 9 or 10, **characterized in that** said polymer matrix is a paint, coating, resin, thermoset or thermoplastic.

12. Doped polymers according to any of claims 9 to 11, **characterized in that** said polymer matrix contains at least two types of thermotropic particles having different switching temperatures.

13. Use of said doped polymers according to any of claims 9 to 12 for sun protection and shading.

## Revendications

1. Procédé destiné à la fabrication de particules thermotropes pour le dopage de matrices de polymères comprenant les étapes suivantes :
a. préparation d'une phase organique comprenant au moins un monomère adapté pour une formation de polymères, ainsi qu'au moins un solvant organique,
b. préparation d'une phase aqueuse comprenant au moins un agent tensioactif et/ou au moins un composé tensioactif,
c. fabrication d'une dispersion de la phase aqueuse et de la phase organique par mélange des deux phases,
d. le cas échéant, adjonction d'au moins un activateur destiné à démarrer la formation de polymères,
e. 1^{er} niveau de la formation de polymères, destiné à la formation d'un noyau de particules étant sphérique pour l'essentiel,
f. 2^{e} niveau de la formation de polymères, destiné à l'intégration de groupes d'ancrage, dérogeant à la disposition sphérique, dans la surface du noyau de particules et
g. isolement des particules thermotropes.

2. Procédé selon la revendication 1,
**caractérisé en ce que** le monomère sélectionné est issu du groupe des composés vinyliques, des acrylates, des diols, des diamines, des phénols, des aldéhydes, des acides dicarboxyliques et des mélanges de ceux-ci, en particulier de l'acide adipique, de l'hexaméthylène diamine, de la paraphénylènediamine, de l'acide téréphtalique, de l'acide sébacique et de ses dérivés, de la lysine, de l'arginine, de l'histidine, de l'acide aspartique, de l'acide glutamique, du bismaléimide et de ses dérivés, de l'hydrazine et de ses dérivés, de l'urée et de ses dérivés, du styrène, du chlorure de vinyle, de l'acétate de vinyle, du vinyl alkyl éther, de l'acétate d'isopropényle, de l'acrylonitrile, d'un ester d'acide acrylique, du méthacrylate de méthyle, de l'acrylate d'octadécyle, de l'acrylate d'hydroxyéthyle, du méthacrylate d'allyle, de l'acrylate d'éthyle ainsi que des mélanges de ceux-ci.

3. Procédé selon l'une des revendications précédentes, **caractérisé en ce que** l'agent tensioactif et/ou les composés tensioactifs sélectionnés sont issus du groupe composé des alkylbenzène sulfonates, des sulfonates d'alcane tels que le dodécylsulfonate de sodium, des sulfates d'alcool gras tels que le laurylsulfate de sodium, des succinates tels que le 1,4-bis(2-éthylhexoxy)-1,4-dioxobutane-2-sulfonate de sodium, de l'acide dodécylbenzènesulfonique, des sulfobétaïnes tels que la propyl sulfobétaïne de pyridinium, de l'hydroxy propyl sulfobétaïne de pyridinium, de la lauryl sulfobétaïne, du carboxylate, de dodécyle et de décyl alkyle, du lauryl glucose carboxylate de sodium, des diols, des triols, des polyols, des diamines, des triamines, des acides dicarboxyliques, des acides aminés, du butanediol, du butynediol, du butènediol, de la n-butylamide, de la butanediamine, de l'hexaméthylène diamine, de l'alcool laurylique, de l'alcool décylique, de l'alcool tétradécylique, de l'alcool stéarylique, de l'acide stéarique, du sulfonate stéarylique, de l'acide érucique, de l'hexadécylamine, de la 1,16-hexadécylamine, des polyols, en particulier du Voranol P400 {masse moléculaire de 400), du Voranol CP 6055 (masse moléculaire de 6000), du Voranol RA 800 (masse moléculaire de 280), du polyéthylène glycol 400 ou du polyéthylène glycol 800, des acides PEG aminés, en particulier de l'alpha-[3-(o-pyridoldisulfido) propanolamido]-oméga-succinimide ester-octa(éthylène glycol) ou du Bzl-O-dPEG(4)-COOH, HO-PEG(24)-CO-tBu, tBu-O2C-PEG(12)-COOH, du méthoxy polyéthylène glycol, du 4-nonylphényl polyéthylène glycol, du poly (alcool vinylique), du PVA entièrement hydrolysé de masse moléculaire 70T, du PVA entièrement hydrolysé de masse moléculaire 200T, du PVA hydrolysé à 98 % de masse moléculaire 27T, du PVA hydrolysé à 88 % de masse moléculaire 125T et des mélanges de ceux-ci.

4. Procédé selon l'une des revendications précédentes, **caractérisé en ce que** le rapport entre la phase organique et la phase aqueuse, se référant aux proportions en poids, se situe dans une plage comprise entre 1:9 et 9:1, en particulier dans une plage comprise entre 0,6:6,3 et 1,5:5.

5. Procédé selon l'une des revendications précédentes, **caractérisé en ce que** la formation de polymères est une polymérisation radicalaire, une polyaddition ou une polycondensation.

6. Particules thermotropes pour le dopage d'une matrice polymère avec un noyau de particules, pour l'essentiel, sphérique et des groupes d'ancrage dérogeant à la disposition sphérique, disposés à la surface du noyau de particules, la tension interfaciale des groupes d'ancrage (y_{A}) se distinguant de la tension interfaciale de la matrice polymère (V_{P}) de 25m/Nm au plus, se distinguant en particulier de 5m/Nm au plus et les particules pouvant être obtenues au moyen du procédé selon l'une des revendications précédentes.

7. Particules thermotropes selon la revendication 6, **caractérisées en ce que** les particules présentent un diamètre de 100 nm à 2 µm, en particulier de 250 nm à 450 nm.

8. Particules thermotropes selon l'une des revendications 6 ou 7,
**caractérisées en ce que** l'activation thermotrope des particules se déroule de manière réversible dans une plage de température comprise entre 25 °C et 80 °C.

9. Polymères dopés comprenant une matrice polymère avec des particules thermotropes selon l'une des revendications 6 à 8.

10. Polymères dopés selon la revendication 9, **caractérisés en ce que** la matrice polymère contient de 0,2 % à 48 % en poids des particules thermotropes, en particulier de 3 % à 25 % en poids des particules thermotropes.

11. Polymères dopés selon la revendication 9 ou 10, **caractérisés en ce que** la matrice polymère est une laque, un revêtement, une résine, un duromère ou une résine thermoplastique.

12. Polymères dopés selon l'une des revendications 9 à 11,
**caractérisés en ce que** la matrice polymère contient au moins deux particules thermotropes dont la température d'activation est différente.

13. Utilisation des polymères dopés selon l'une des revendications 9 à 12 pour la protection solaire et destinée à l'ombrage.
